# EUROPEAN PATENT APPLICATION

(11) **EP 4 659 896 A1**
(43) Date of publication of application: **10.12.2025**
(21) Application number: 24749860.3
(22) Date of filing: 05.01.2024
(51) Int. Cl.: B23Q 41/00

(54) **ARTICLE CONVEYANCE SYSTEM AND ARTICLE CONVEYANCE METHOD**

(30) Priority: 31.01.2023 JP 2023013238
(71) Applicant: Amada Co., Ltd., Isehara-shi, Kanagawa 259-1196 (JP)
(72) Inventor: KITAZAWA, Masaya, Isehara-shi, Kanagawa 259-1196 (JP)
(74) Representative: Grünecker Patent- und Rechtsanwälte PartG mbB
(86) International application number: PCT/JP2024/000046
(87) International publication number: WO 2024/161904

(57) **Abstract**

An article transport system (ST) includes: a processing machine (M1); a pallet (3) on which an article (5) processed by the processing machine (M1) is placed; a transport robot (R) configured to transport the pallet (3); a transport request unit (91) configured to make a transport request to the transport robot (R) for transporting the pallet (3) to the processing machine (M1); and an intermediate buffer (1) including a pallet accommodation section (11P) which accommodates the pallet (3), in which the pallet (3) is inserted and from which the pallet (3) is retrieved, and configured to determine whether the article (5) is placed on the pallet (3), and to transmit a determination result to the transport request unit (91). The transport request unit (91) is configured to designate the pallet (3), which is to be transported by the transport robot (R) in the transport request, as an empty pallet (3) determined to have no article (5) placed thereon, among the pallet (3) accommodated in the intermediate buffer (1).

## Description

### TECHNICAL FIELD

The present invention relates to an article transport system and an article transport method.

### BACKGROUND ART

Patent Document 1 describes an automated guided vehicle used as a means for transporting articles such as workpieces in production processes of various products. This automated guided vehicle is equipped with information processing functions to provide instructions for work to be performed on the loaded workpieces and to control operations suitable for the work content.

Patent Document 2 describes an article storage device that has a stocker for accommodating multiple pallets, detects empty pallets, among the pallets in the stocker, from which accommodated parts have been removed, and moves them to a discharge platform.

Related technologies are exemplified in Japanese Patent No. 2611225 (Patent Document 1) and Japanese Translation of PCT International Application Publication No. JP-T-6-99008 (Patent Document 2).

### SUMMARY OF THE INVENTION

### PROBLEMS TO BE SOLVED BY THE INVENTION

When manufacturing products through multiple processing steps, it is required that empty pallets for transporting processed articles to the next process be reliably supplied to the first process. However, even by combining the technologies described in Patent Documents 1 and 2, the requirement cannot be realized, so further innovations are desired to facilitate smooth manufacturing.

### MEANS FOR SOLVING THE PROBLEMS

In order to solve the above issue, one aspect of the present invention has the following configurations 1) and 2).
1) An article transport system including:
   a processing machine;
   a pallet on which an article processed by the processing machine is placed;
   a transport robot configured to transport the pallet;
   a transport request unit configured to make a transport request to the transport robot for transporting the pallet to the processing machine; and
   an intermediate buffer: including a pallet accommodation section which accommodates the pallet, in which the pallet is inserted and from which the pallet is retrieved; and configured to determine whether the article is placed on the pallet, and to transmit a determination result to the transport request unit, wherein
   the transport request unit is configured to designate the pallet, which is to be transported by the transport robot in the transport request, as an empty pallet determined to have no article placed thereon, among the pallet accommodated in the intermediate buffer.
2) An article transport method using an article transport system including multiple pallets, a transport request unit, and an intermediate buffer and a transport robot communicating with the transport request unit, the method including:
   transmitting, by the intermediate buffer including multiple pallet accommodation sections capable of accommodating the pallets, information specifying a pallet accommodation section accommodating an empty pallet, to the transport request unit;
   transporting, by the transport robot, the pallet from a first location to a second location which are designated by the transport request unit; and
      when supplying, to a processing machine, an empty pallet for placing and transporting an article processed by the processing machine, transporting and supplying, by the transport request unit, the empty pallet from the pallet accommodation section specified by the information, to the processing machine.

### EFFECTS OF THE INVENTION

According to one aspect of the present invention, the effect is obtained that empty pallets for transporting processed articles to the next process are reliably supplied to the first process, thereby facilitating manufacturing.

### BRIEF DESCRIPTION OF DRAWINGS

[FIG. 1] FIG. 1 illustrates the layout of a factory P where an article transport system ST according to an embodiment of the present invention is applied.
[FIG. 2] FIG. 2 is a side view illustrating a state where a transport robot R equipped in the article transport system ST transports a pallet 3.
[FIG. 3] FIG. 3 is a perspective view illustrating an intermediate buffer 1 equipped in the article transport system ST.
[FIG. 4] FIG. 4 is a block diagram of the article transport system ST.
[FIG. 5] FIG. 5 is a pallet management table for explaining management of pallets 3 by a data server 91 of the article transport system ST.
[FIG. 6] FIG. 6 is a flow diagram of an operation of a take-out loader TKL equipped in the article transport system ST.
[FIG. 7] FIG. 7 is a sequence diagram of an operation requesting supply of an empty pallet 3 by the take-out loader TKL.
[FIG. 8A] FIG. 8A is a flow diagram of the first half of a first operation by the intermediate buffer 1.
[FIG. 8B] FIG. 8B is a flow diagram of the latter half of the first operation.
[FIG. 9A] FIG. 9A is a flow diagram of the first half of a second operation by the intermediate buffer 1.
[FIG. 9B] FIG. 9B is a flow diagram of the latter half of the second operation.
[FIG. 10] FIG. 10 is a sequence diagram of an operation requesting pallet retrieval by the take-out loader TKL.
[FIG. 11] FIG. 11 is a sequence diagram of an operation responding to a pallet movement request by an operator in the article transport system ST.

### DETAILED DESCRIPTION

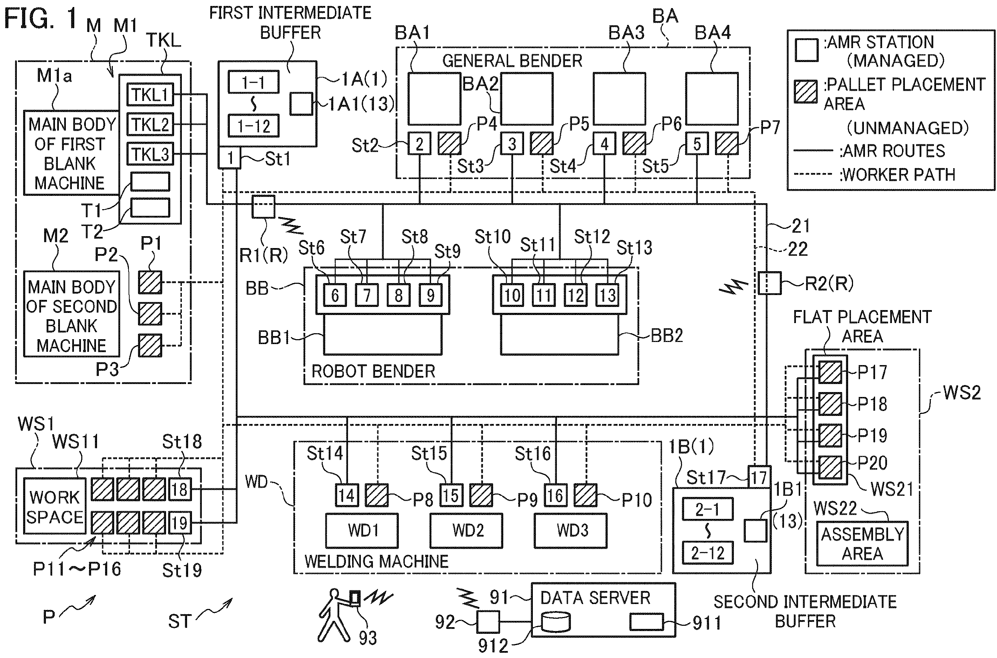

An article transport system and an article transport method according to one or more embodiments of the present invention will be explained using an article transport system ST. First, the configuration of the article transport system ST will be explained with reference to FIGS. 1 to 4.

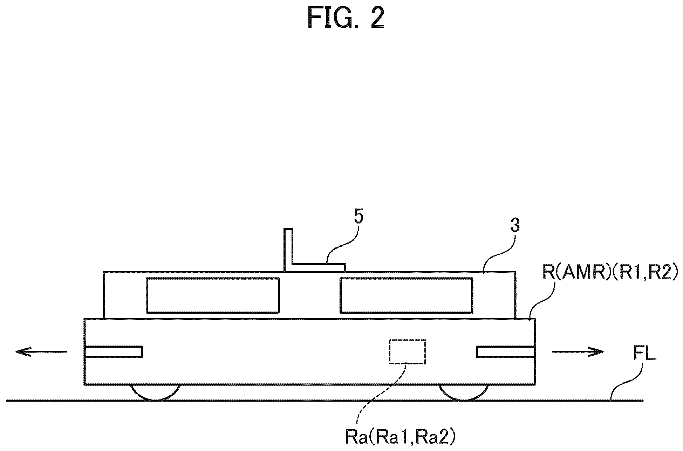

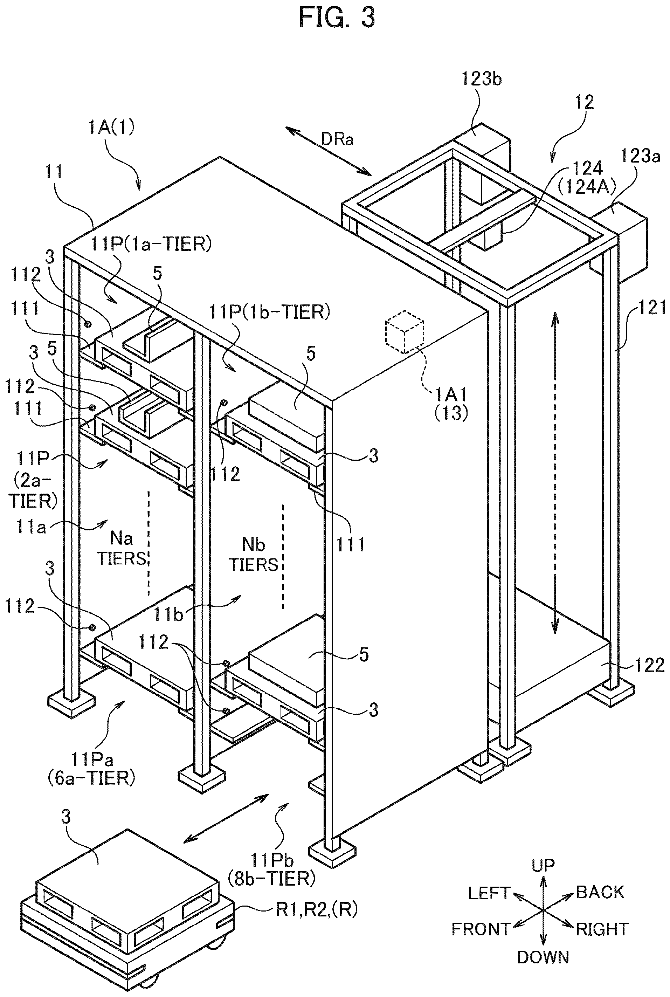

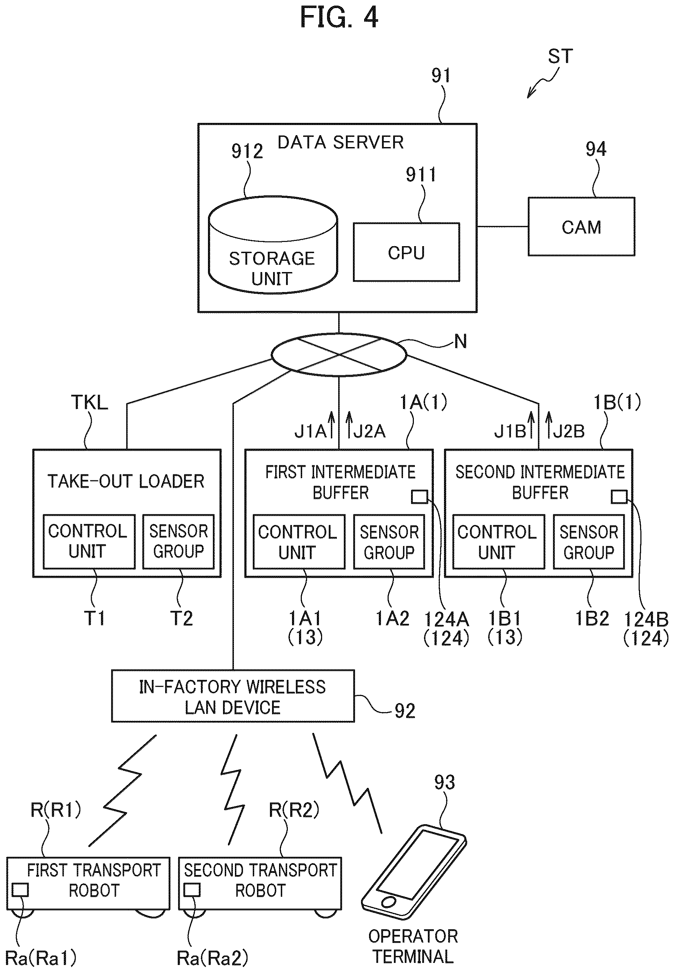

FIG. 1 illustrates a layout of a factory P where the article transport system ST according to an embodiment of the present invention is applied. FIG. 2 is a side view illustrating a state where a transport robot R equipped in the article transport system ST transports a pallet 3 where an article 5 is placed. FIG. 3 is a perspective view illustrating an intermediate buffer 1 equipped in the article transport system ST. FIG. 4 is a block diagram of the article transport system ST.

The article 5 (see FIG. 2) includes a product manufactured in the factory P, a material, and an intermediate product during manufacturing. In the factory P, the article transport system ST transports the article 5 by carrying the pallet 3 (see FIG. 2) where the article 5 is placed, using the transport robot R, which is what is called an AMR (Autonomous Mobile Robot) that travels autonomously. The article transport system ST is configured in such a manner that its operation is established even when transport by the transport robot R, and transport where an operator manually carries the pallet 3 where the article 5 is placed coexist. The transport robot R is also simply referred to as AMR below.

In the factory P, products are completed by assembling multiple parts formed from materials through processing by at least a blank machine, and a bender or welding machine.

As illustrated in FIG. 1, in the article transport system ST, pallet placement areas where pallets 3 are placed include: (1) AMR stations St1 to St19 managed by a data server 91 as transport targets for AMR, and (2) unmanaged pallet placement areas P1 to P20 that the data server 91 does not manage as AMR transport targets. The pallet placement areas P1 to P20 are shown with hatching in FIG. 1.

As illustrated in FIG. 1, the factory P has the following floor areas: a blank area M, a general bender area BA, a robot bender area BB, a welding area WD, a first work area WS1, and a second work area WS2. Near the blank area M, a first intermediate buffer 1A of the intermediate buffer 1 is installed, and near the second work area WS2, a second intermediate buffer 1B of the intermediate buffer 1 is installed.

In the blank area M, a first blank machine M1 and a second blank machine M2 are installed as processing machines. The first blank machine M1 and the second blank machine M2 perform hole drilling and other processing on articles 5 as the first step in manufacturing.

The first blank machine M1 includes a main body M1a, and a take-out loader TKL which is an automatic loading/unloading device for the pallet 3. The take-out loader TKL includes three TKL stations TKL1 to TKL3 that accommodate empty pallets 3 transported by the transport robot R, and a control unit T1. Processed articles 5 processed by the first blank machine M1 are placed on the empty pallets 3 accommodated in the TKL stations TKL1 to TKL3. The TKL stations TKL1 to TKL3 are equipped with sensors T21 to T23, respectively, each of which determines whether the pallet 3 is accommodated, and transmits the determination result to the control unit T1. Hereinafter, the sensors T21 to T23 are collectively referred to as a sensor group T2 (see FIG. 4).

The second blank machine M2 is operated by an operator. Near the second blank machine M2, the unmanaged pallet placement areas P1 to P3 are provided, which are not subject to the AMR transport. The operator places processed articles on the empty pallets 3 manually transported to the pallet placement areas P1 to P3.

In the general bender area BA, general benders BA1 to BA4 operated by an operator are installed. Corresponding to the general benders BA1 to BA4, AMR stations St2 to St5 and unmanaged pallet placement areas P4 to P7 are provided, respectively.

In the robot bender area BB, automatically operated robot benders BB1 and BB2 are installed. AMR stations St6 to St9, and AMR stations St10 to St13 are installed in connection with the robot benders BB1 and BB2, respectively.

In the welding area WD, welding machines WD1 to WD3 operated by an operator are installed. Near the welding machines WD1 to WD3, AMR stations St14 to St16 and unmanaged pallet placement areas P8 to P10 are provided, respectively. The operator welds an article to be processed, placed on each of the pallets 3 transported to the AMR stations St14 to St16 by the transport robot R and on each of the pallets 3 transported to the pallet placement areas P8 to P10 by a worker, then returns them to the pallets 3. The pallet 3 to which a processed article is returned may be any empty pallet 3.

The first work area WS1 has a work space WS11 where a worker performs manual work, such as deburring, on a processed article processed by the first blank machine M1 or the second blank machine M2. Adjacent to this work space WS11, AMR stations St18 and St19, and unmanaged pallet placement areas P11 to P16 are provided. A worker performs an operation, such as deburring, on an article to be worked placed on each pallet 3 transported to the AMR stations St18 and St19 by the transport robot R, and on each pallet 3 transported to the pallet placement areas P11 to P16 by a worker, then places the worked article on each pallet 3.

The second work area WS2 is a space for assembling and inspecting processed articles that have completed processing at each processing machine. An assembly area WS22 is reserved as a work space. In the second work area WS2, pallet placement areas P17 to P20 are provided in a flat placement area WS21. When passing the inspection, articles are transported as products on the pallets 3 to a packing location, which is not illustrated, and are shipped.

The article transport system ST includes the intermediate buffer 1, which includes a control unit 13. In this example, two intermediate buffers are provided: the first intermediate buffer 1A and the second intermediate buffer 1B, as the intermediate buffer 1. The first intermediate buffer 1A is installed near the blank area M, and the second intermediate buffer 1B is installed near the second work area WS2.

Since the first intermediate buffer 1A and the second intermediate buffer 1B have the same structure, the first intermediate buffer 1A will be explained as a representative example with reference to FIG. 3. For convenience of explanation, the directions up, down, left, right, front, and back are defined as shown by arrows in FIG. 3.

The first intermediate buffer 1A includes a housing 11 and a movable frame 12. The housing 11 is equipped with a control unit 1A1 as the control unit 13. The housing 11 is a shelf structure installed on the floor, having two rows of shelves: a first shelf 11a and a second shelf 11b arranged in the left-right direction. The first shelf 11a has Na tiers of pallet accommodation sections 11P in the vertical direction, and the second shelf 11b has Nb tiers of pallet accommodation sections 11P in the vertical direction.

The pallet accommodation section 11P is formed with the width in the left-right direction and the depth in the front-back direction sized to accommodate the pallet 3. Each pallet accommodation section 11P is provided with a guide bracket 111 that guides the entry and exit of the pallet, 3 and supports the accommodated pallet 3. The accommodation height (internal height) of the pallet accommodation section 11P differs between the first shelf 11a and the second shelf 11b. For example, the accommodation height of each pallet accommodation section 11P of the first shelf 11a is set higher than that of the second shelf 11b, with Na tiers being 6 tiers and Nb tiers being 8 tiers. Of these, two are used for the entry and exit of the transport robot R, so the intermediate buffer 1 has pallet accommodation sections 11P capable of accommodating a maximum of 12 pallets: 5 tiers for the first shelf 11a and 7 tiers for the second shelf 11b.

For convenience, the topmost pallet accommodation sections 11P of the first shelf 11a and the second shelf 11b are designated as 1a and 1b, respectively, with numbers assigned in ascending order, and the bottommost pallet accommodation sections 11P are designated as 6a and 8b, respectively.

The bottommost pallet accommodation sections 11Pa and 11Pb numbered 6a and 8b in the first shelf 11a and the second shelf 11b are dedicated accommodation sections for the transport robot R entry and exit as mentioned above. For the pallet accommodation sections 11Pa and 11Pb, only the transport robot R can insert and remove pallets 3 from the front side.

Except for the pallet accommodation sections 11Pa and 11Pb, the others are general-purpose tiers, and the pallet accommodation sections 11P numbered 1a to 5a and 1b to 7b allow a worker to directly insert and remove pallets 3 from the front side. In FIG. 1, worker paths connecting to the first intermediate buffer 1A and the second intermediate buffer 1B are shown with broken lines connected to the AMR station St1 for convenience, representing worker paths for loading into general-purpose tiers.

Each of the pallet accommodation sections 11P numbered 1a to 6a and 1b to 8b is equipped with a sensor 112 that detects whether the pallet 3 is accommodated. Hereinafter, these 14 sensors 112 in total are collectively referred to as a sensor group 1A2 (see FIG. 4).

The detection signals from the 14 sensors 112 are input independently to the control unit 1A1. This allows the control unit 1A1 to independently determine the presence or absence of the pallet 3 accommodation for each of the 14 pallet accommodation sections 11P. The control unit 1A1 outputs pallet accommodation information J1A indicating whether the pallet 3 is accommodated in each of the 14 pallet accommodation sections 11P, to a data server 91 (see FIG. 4).

The second intermediate buffer 1B has a similar configuration, with a control unit 1B1 as the control unit 13, and a sensor group 1B2. The control unit 1B1 of the second intermediate buffer 1B outputs pallet accommodation information J1B indicating whether the pallet 3 is accommodated in each of the 14 pallet accommodation sections 11P of the second intermediate buffer 1B, to the data server 91 (see FIG. 4).

The movable frame 12 is installed behind the housing 11, with a width approximately half that of the housing 11, a height similar to the housing 11, and a depth larger than the pallet 3. Movable frame 12 moves between a position behind first shelf 11a and a position behind second shelf 11b shown in FIG. 3 (see arrow DRa).

The movable frame 12 includes a pallet lifting unit 122, an imaging device 124, a drive unit 123a, and a drive unit 123b. Under control of the control unit 13, the pallet lifting unit 122 is driven by the drive units 123a and 123b to lift and lower the pallet 3 between the bottommost tiers 6a and 8b, and the topmost tiers 1a and 1b, capable of stopping and maintaining position at heights corresponding to each tier.

Through the combination of lifting and lowering by the drive units 123a and 123b, and left-right movement of the movable frame 12, the pallet lifting unit 122 can be positioned behind each of the multiple pallet accommodation sections 11P of the housing 11 and maintained in a stopped state at that position. The pallet lifting unit 122 can stop behind any pallet accommodation section 11P and exchange the pallet 3 with that pallet accommodation section 11P. That is, the pallet 3 accommodated in the pallet accommodation section 11P can be moved onto the pallet lifting unit 122, and the pallet 3 placed on the pallet lifting unit 122 can be moved to the pallet accommodation section 11P for accommodation. This operation is controlled by the control unit1A1. In the second intermediate buffer 1B, it is controlled by the control unit 1B1.

This allows the pallet lifting unit 122 to move the pallet 3 accommodated in, for example, the pallet accommodation section 11Pb in 8b by the transport robot R to other empty pallet accommodation sections 11P except for 6a. Also, the pallet 3 accommodated in any pallet accommodation section 11P other than 6a and 8b by a worker can be moved to either 6a or 8b pallet accommodation section 11P for loading onto the transport robot R.

Also, the pallet lifting unit 122 can move pallets 3 accommodated in the pallet accommodation sections 11P other than 6a and 8b by a worker to other empty pallet accommodation sections 11P.

The intermediate buffer 1 can determine whether the article 5 is placed on the pallet 3, which has been newly accommodated from outside by the a transport robot R or a worker in the pallet accommodation section 11P, that is, whether the pallet is empty. In this example, the data server 91 analyzes an image captured by the imaging device 124 (124A, 124B) to make the determination. The determination operation will be explained below using the first intermediate buffer 1A as a representative example.

When distinction is necessary in the following explanation, the imaging device 124 will be distinguished as the imaging device 124A (first intermediate buffer 1A) and the imaging device 124B (second intermediate buffer 1B).

As illustrated in FIG. 3, the imaging device 124 is positioned at the center of the top framework of the movable frame 12 and captures an image downward. Specifically, when the pallet lifting unit 122 is at a position corresponding to the topmost tier 1a or 1b, it focuses on and captures a full image of the pallet 3 placed on the pallet lifting unit 122.

The control unit 1A1 performs imaging of the pallet 3 using the imaging device 124A before moving the pallet 3 accommodated in, for example, the 8b tier by the transport robot R to an empty pallet accommodation section 11P. Specifically, when the control unit 1A1 detects that the pallet 3 has been accommodated in the 8b pallet accommodation section 11Pa by the sensor 112 of the 8b tier, it moves the pallet lifting unit 122 of the movable frame 12 to the 8b position, and moves the pallet 3 to the pallet lifting unit 122.

Next, the control unit 1A1 raises the pallet lifting unit 122 carrying the pallet 3 to the position of the topmost tier 1b, and captures a top view image of the pallet 3 using the imaging device 124A. The control unit 1A1 analyzes this image to determine whether the article 5 is placed on the pallet 3, that is, whether the pallet 3 is an empty pallet. The control unit 1A1 transmits the determination result to the data server 91. Along with this, the control unit 1A1 may output image information J2A (see FIG. 4) of the image captured by the imaging device 124A to the data server 91. In the second intermediate buffer 1B, the control unit 1B1 may output image information J2B of an image captured by the imaging device 124B to the data server 9.

After imaging the pallet 3, the control unit 1A1 moves that pallet 3 to an empty pallet accommodation section 11P other than 6a and 8b through lifting and lowering of the pallet lifting unit 122 and left-right movement of the movable frame 12 for shelf and tier selection. When multiple empty pallet accommodation sections 11P are available, the transfer destination is determined according to predetermined rules. For example, the first shelf 11a is prioritized over the second shelf 11b, and within the same shelf, smaller tier numbers are prioritized.

Information about whether each pallet accommodation section 11P is empty is constantly shared between the control unit 13 (1A1, 1B1) and the data server 91.

When the pallet 3 is accommodated in any pallet accommodation section 11P other than 6a and 8b by a worker, the control unit 1A1 performs the same operation as for transport robot R cases, temporarily moving the accommodated pallet 3 to the topmost tier position of the movable frame 12 and imaging the pallet3 using the imaging device 124. Then it executes the operation of returning to the original pallet accommodation section 11P where the worker accommodated it. This series of empty pallet confirmation work, that is, the operation of moving the pallet 3, which has been inserted, imaging it with the imaging device 124, under control of the control unit 13, and determining from the captured image whether the pallet 3 is an empty pallet, is hereinafter referred to as a pallet state confirmation operation.

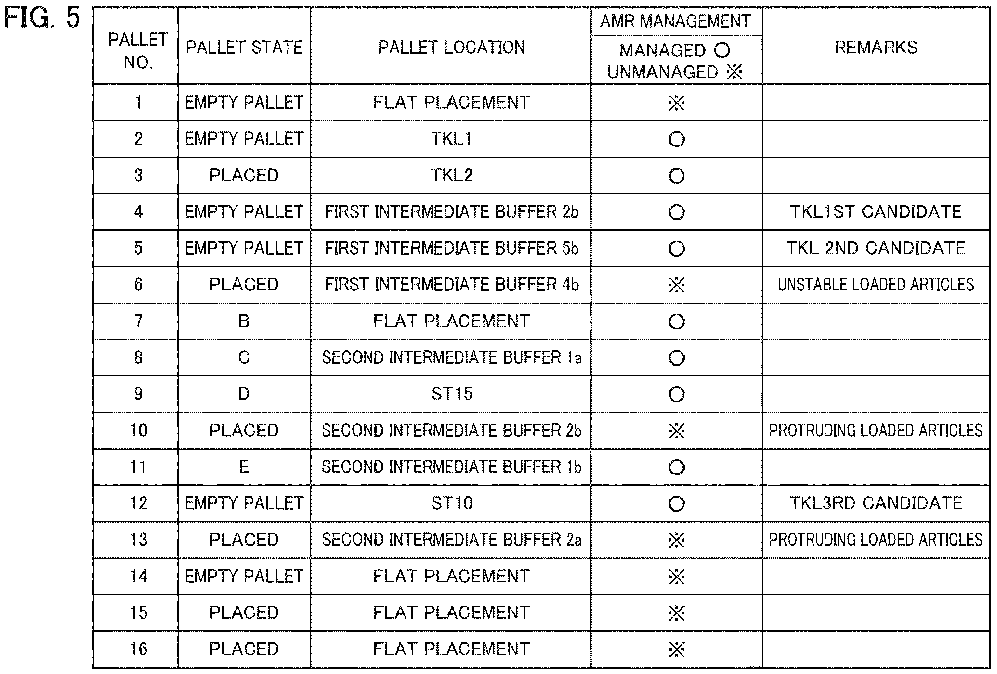

The data server 91 manages the state of pallets 3 used in the article transport system ST, including a pallet state confirmation operation (see FIG. 5). For example, the data server 91 functions as a transport request unit that makes a request to the transport robot R to load the pallet 3 and transport it to processing machines. Details of pallet management by the data server 91 will be described later.

FIG. 2 illustrates the state where the transport robot R equipped in the article transport system ST transports the pallet 3. The transport robot R includes a control unit Ra that controls its own operations and travels autonomously on a floor FL. As illustrated in FIG. 4, the control unit Ra communicates wirelessly with an in-factory wireless LAN device 92 connected to the a data server 91 via a network N, and executes operations, such as traveling, according to instructions from the data server 91. For example, the transport robot R moves the pallet 3 from a first location designated as the transport source to a second location designated as the transport destination by the data server 91.

In this example, two transport robots are operated: a first transport robot R1 and a second transport robot R2 as the transport robot R for transporting the pallet 3. When distinguishing the control unit Ra for these two robots, they are designated as control units Ra1 and Ra2, respectively.

In FIG. 1, routes that the transport robot R can travel are indicated as solid lines (AMR routes). On the other hand, transport routes for the pallet 3 by a worker are indicated as broken lines (worker routes).

As illustrated in FIGS. 1 and 4, the data server 91 has a CPU (Central Processing Unit) 911 and a storage unit 912. As illustrated in FIG. 4, the data server 91 is connected via the network N to the take-out loader TKL, the first intermediate buffer 1A, the second intermediate buffer 1B, and the in-factory wireless LAN device 92. The in-factory wireless LAN device 92 is wirelessly connected to the first transport robot R1, the second transport robot R2, and an operator terminal 93. A CAM 94 that generates operation programs is connected to the data server 91.

The operator terminal 93 is an information terminal carried by a worker and an operator, connected to the data server 91 and the transport robot R via the network N through the in-factory wireless LAN device 92. The worker and the operator can use the operator terminal 93 to transmit commands to the data server 91 from the work site, and view and update a pallet management table illustrated in FIG. 5.

In the above-described article transport system ST, the data server 91 operates the system by executing the following operations.

That is, the data server 91 manages the state of each of multiple pallets 3. The control unit 13 of the intermediate buffer 1 notifies the data server 91 of changes in the pallet 3 state regarding whether it is empty or has an article placed on it. The data server 91 receives this notification, updates pallet 3 state management, and constantly maintains it in the latest state.

The take-out loader TKL transmits a command to the data server 91 and the transport robot R. For example, it transmits a command to the data server 91 requesting supply of an empty pallet 3. It also transmits a command to the transport robot R requesting retrieval of the pallet 3 where a processed article is placed, to the next process.

Regarding the former empty pallet request, details are as follows. When there are no pallet 3 for loading an article processed by the first blank machine M1 in any of the TKL stations TKL1 to TKL3, the take-out loader TKL transmits a command to the data server 91 requesting supply of an empty pallet 3 to any of the TKL stations TKL1 to TKL3.

In response to this request, the data server 91 supplies an empty pallet 3 to be accommodated in the intermediate buffer 1, to any of the TKL stations TKL1 to TKL3 using the transport robot R. When no empty pallet 3 is accommodated in the intermediate buffer 1, the data server 91 searches for stations with an empty pallet 3 among the AMR stations St1 to St19, based on the pallet management status. Then the data server 91 instructs the transport robot R to transport an empty pallet 3 from the AMR station where it is placed, to the intermediate buffer 1 for temporary accommodation.

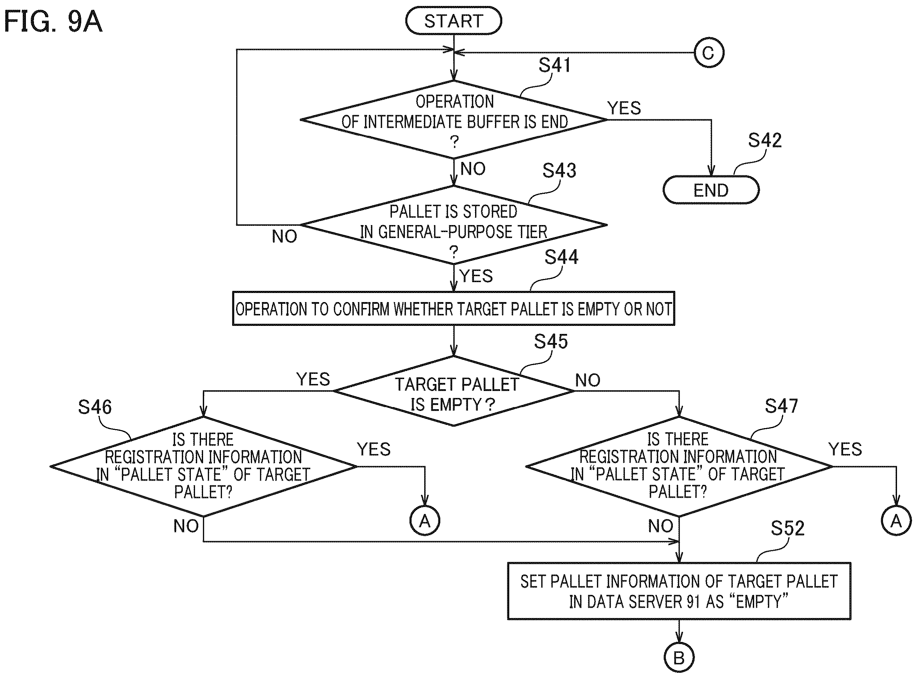

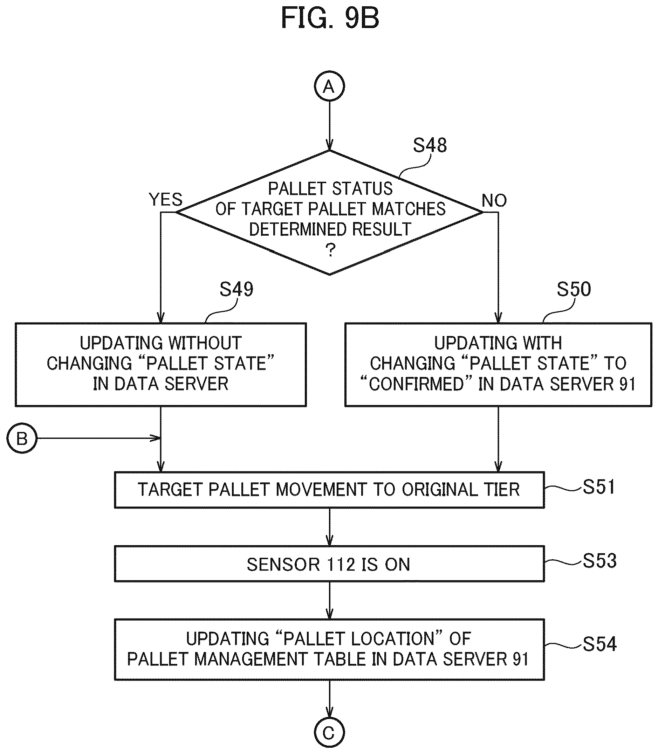

The above operation will be explained according to the mass production example of products, with reference to the flow diagrams of FIGS. 5 to 8B, and the sequence diagrams of FIGS. 9 to 11.

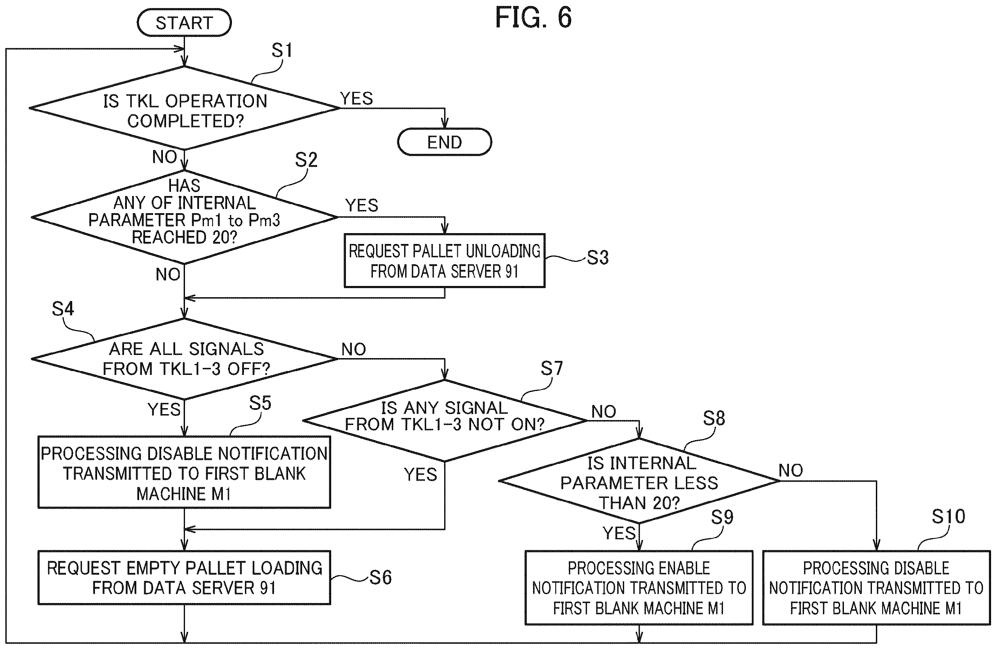

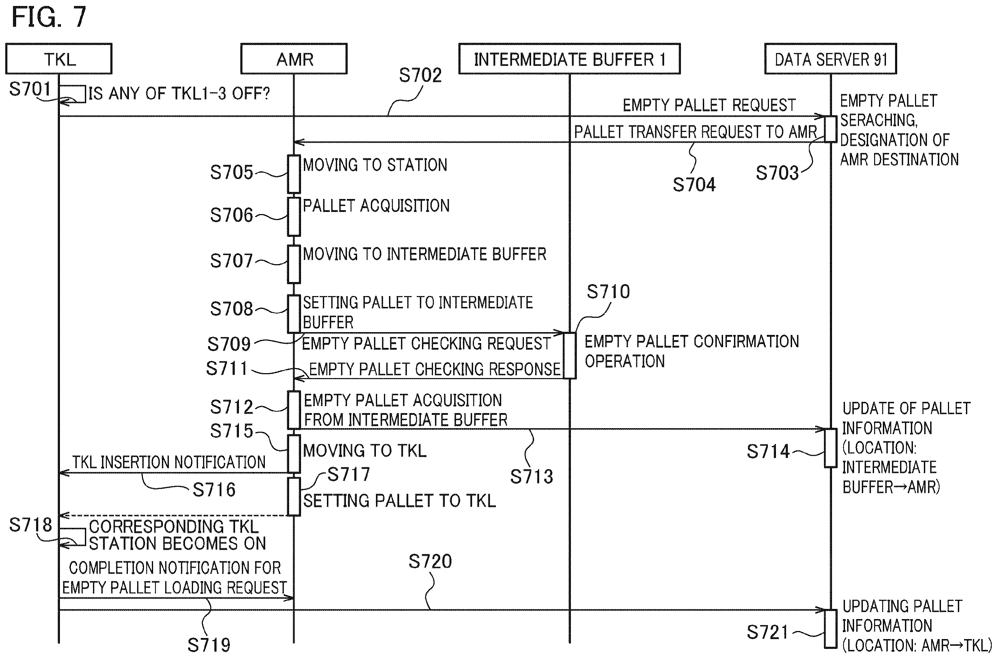

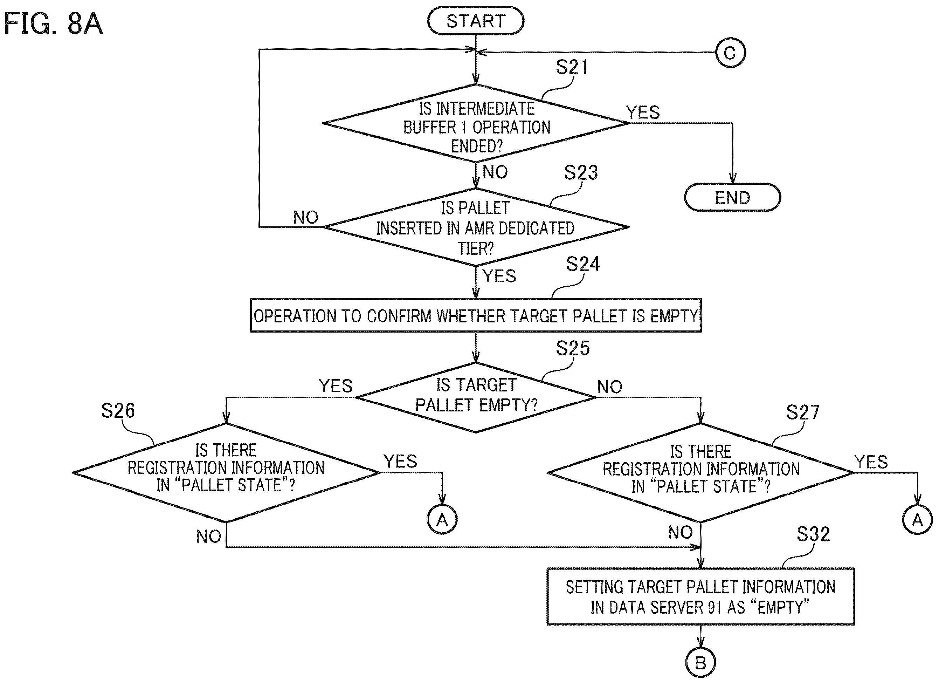

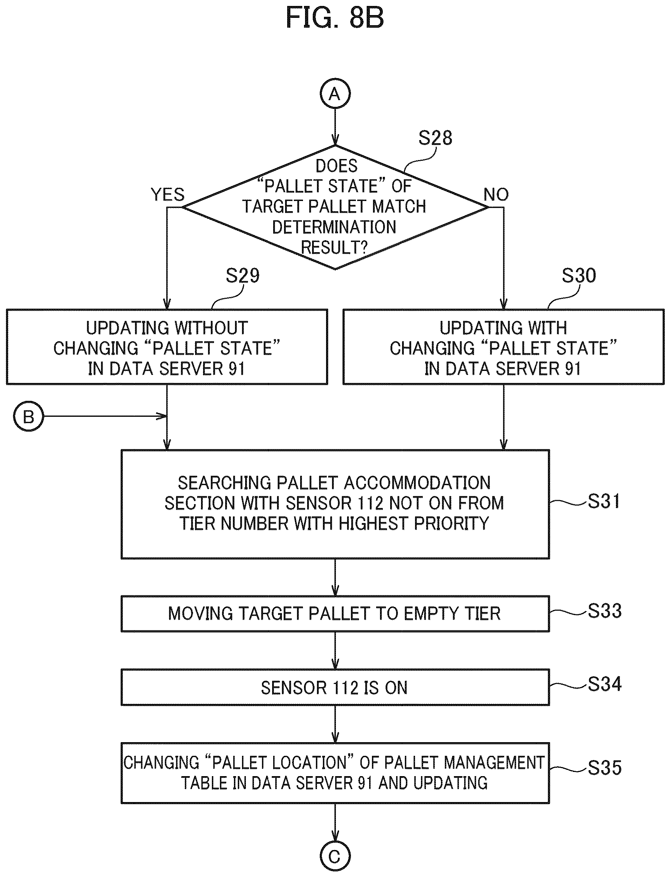

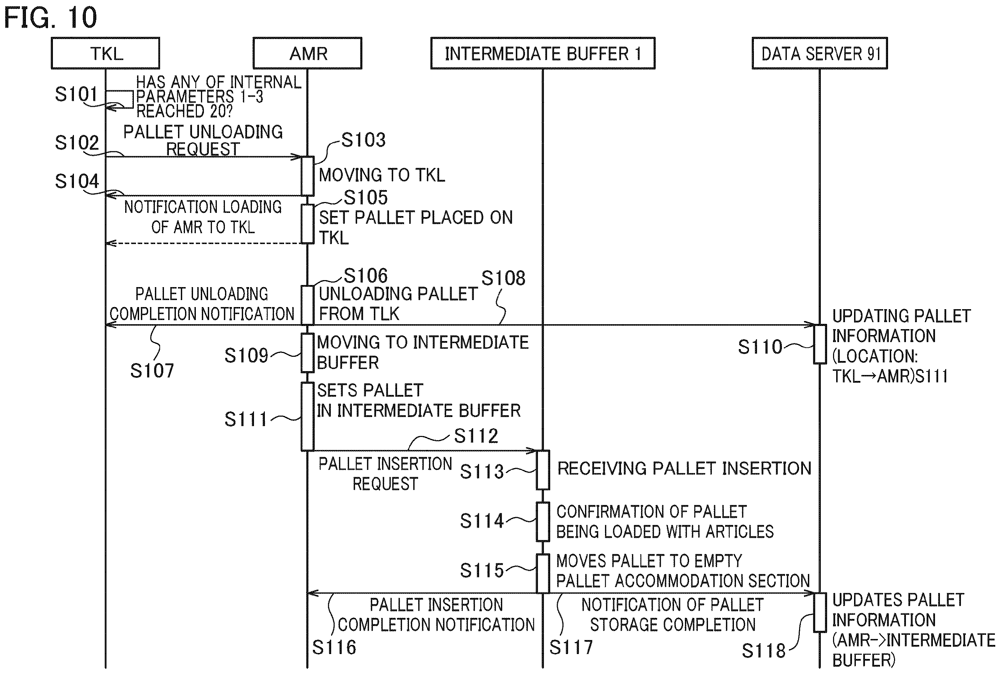

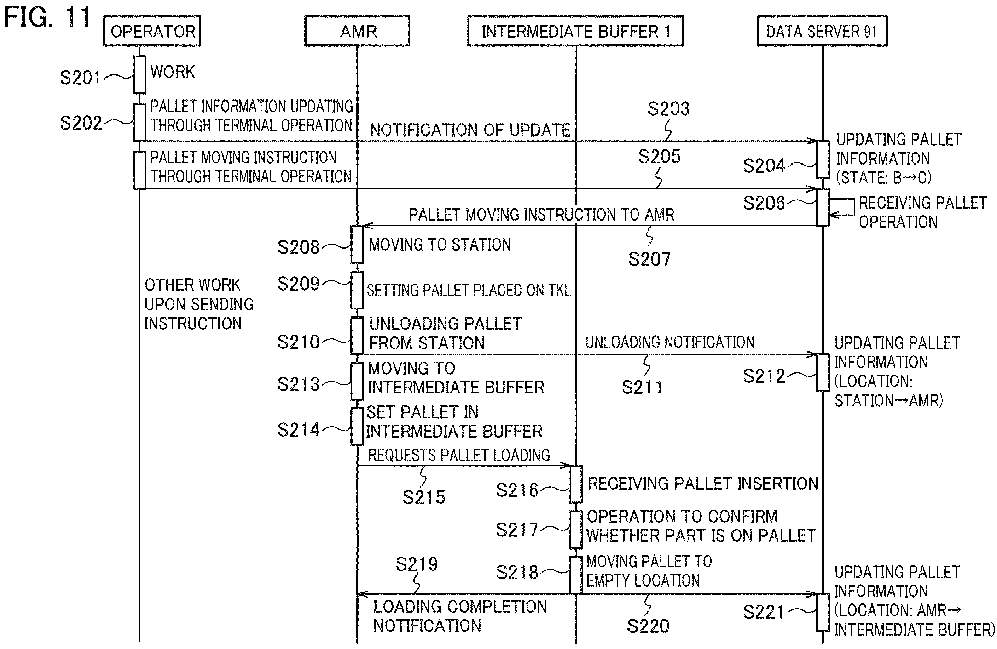

FIG. 5 is a pallet management table for explaining management of pallets 3 by the data server 91 of the article transport system ST. FIG. 6 is a flow diagram of the operation of the take-out loader TKL equipped in the article transport system ST. FIG. 7 is a sequence diagram of the operation requesting supply of an empty pallet 3 by the take-out loader TKL. FIG. 8A is a flow diagram of the first half of a first operation by the intermediate buffer 1, and FIG. 8B is a flow diagram of the latter half of the first operation. FIG.9A is a flow diagram of the first half of a second operation by the intermediate buffer 1, and FIG. 9B is a flow diagram of the latter half of the second operation. FIG. 10 is a sequence diagram of the operation requesting pallet retrieval by the take-out loader TKL. FIG. 11 is a sequence diagram of the operation responding to a pallet movement request by an operator in the article transport system ST.

The mass production example of articles is as follows, and the pallet 3 transport process during this mass production is illustrated in six stages: transport A through transport E.

An empty pallet 3 is transported from the intermediate buffer 1 to the take-out loader TKL (transport A). Punching processing of materials is performed with the first blank machine M1. Next, a punched part placed on the pallet 3 is transported to the first work area WS1 (transport B), and deburring work is performed on the part. Next, the deburred part placed on the pallet 3 is transported to the welding machine WD1 (transport C), and welding is performed on the deburred part with the welding machine WD1. The welded part placed on the pallet 3 is transported to the second work area WS2 (transport D). In the second work area WS2, the welded part is inspected, and the qualified product is transported on the pallet 3 as a product to a packing location (transport E).

In the pallet management table of pallets 3 illustrated in FIG. 5, items grasped from the latest information include "pallet state", "pallet location", "AMR management (managed/unmanaged)", and "remarks", which are linked to each pallet No. Pallet No. need not be set for each individual pallet 3, and may be set in order from when information is confirmed from the start of management, and maintained through subsequent information updates to item contents.

Of course, each individual pallet 3 may be linked to a pallet No. In this case, each pallet 3 has a tag or other device storing information specifying an assigned number, and the sensor groups 1A2 and 1B2 provided in the intermediate buffer 1 can detect and specify the pallet No. of a pallet 3 to be inserted.

The "pallet state" item indicates whether it is empty (empty pallet) with nothing placed on it, or has an article placed on it (placed). Also, when in the middle of transport A through transport E mentioned above, it is indicated by transport A through transport E. For example, in FIG. 5, pallet No. 7 to No. 9, and No. 11 correspond to transport B through transport D, and transport E, respectively.

The "pallet location" item indicates the position where the pallet 3 exists or most recently existed, using an AMR station or a pallet placement area. Specifically, it indicates the TKL stations TKL1 to TKL3, the AMR stations St1 to St19, the pallet accommodation sections 11P numbered 1a to 5a and 1b to 7b of the first intermediate buffer 1A and the second intermediate buffer 1B, and pallet placement areas (flat placement) in the flat placement area. For example, pallet No. 8 indicates current moving to the welding machine WD1 carrying a deburred part, and most recent accommodation in the tier 1a of the second intermediate buffer 1B, or temporary accommodation in the tier 1a during movement to the welding machine WD1.

The "AMR management" item indicates whether each pallet with pallet No. can currently be transported by the transport robot R ("managed (open circle)") or cannot be transported by the transport robot R("unmanaged (asterisk)").

The "remarks" item indicates points of attention for each pallet. This column is input by a worker and an operator through the operator terminal 93. "TKL candidate" in the "remarks" item is entered when the corresponding pallet is accommodated in the intermediate buffer 1 and is empty, and when it is available as an empty pallet at any AMR station. When this notation exists, it indicates that it is a pallet candidate that can be supplied when there is a request for an empty pallet 3 from the take-out loader TKL. When an empty pallet at AMR stations is supplied upon a request, it is first transported to the intermediate buffer1 and confirmed to be empty. Therefore, the empty pallet in the intermediate buffer 1 is prioritized over an empty pallet at AMR stations due to shorter time required for supply. "Remarks" may include this priority order as illustrated in FIG. 5. For example, in FIG. 5, there are three empty pallets available for supply: pallet No. 4, 5, and 12. Of these, No. 4 and 5 are in the intermediate buffer 1 while No. 12 is at the AMR stations, making No. 12 third priority (third candidate). The priority order for empty pallets No. 4 and 5 in the intermediate buffer 1 follows predetermined rules, with No.4 being first priority (first candidate) and No. 5 being second priority (second candidate) since they are on the same second shelf 11b with smaller tier numbers being prioritized. Remarks column entries are not limited to recording of the priority order; when empty pallets exist in both the intermediate buffer 1 and AMR stations, pallets in the intermediate buffer 1 may be marked "priority" while empty pallets at AMR stations may be marked "non-priority" or "excluded". Of course, when there are no empty pallets in the intermediate buffer 1 and only at AMR stations, empty pallets at AMR stations may be marked "priority" or with ranking notation in the "remarks" column. "Unstable placed articles" and "protruding placed articles" in the "remarks" item are entered as aspects requiring special attention when the article 5 is placed. In these cases, automatic transport by the transport robot R may be problematic, so they are also designated as unmanaged by the AMR.

Next, an operation example of the take-out loader TKL will be explained with reference to FIG. 6. FIG. 6 is the flow diagram of the operation of the take-out loader TKL equipped in the article transport system ST. Here, processed articles processed by the first blank machine M1 are placed on pallets 3 in the TKL stations TKL1 to TKL3 with 20 articles as the full capacity, and pallets 3 where 20 processed articles are placed, are transported to the next process by the transport robot R. In the following explanation, in the pallet management table illustrated in FIG. 5, it is assumed that pallet No. 4 and No. 5 are not TKL candidates, and only pallet No. 12 at the AMR station St10 is available as an empty pallet TKL candidate.

First, the control unit T1 of the take-out loader TKL checks whether to end operation (S1). If there is an instruction to end the operation from an external source, such as an operator (YES/TRUE), it ends the operation.

If there is no instruction to end the operation (NO/FALSE), the control unit T1 continues the operation. The control unit T1 counts each time a processed article is placed on the pallet 3 placed in each of the three TKL stations TKL1 to TKL3, monitoring the number of articles placed on pallets 3 as internal parameters Pm1 to Pm3 for the TKL stations TKL1 to TKL3, respectively.

The control unit T1 determines whether any of the internal parameters Pm1 to Pm3 has reached 20 (S2).

If the control unit T1 determines that any has reached 20 (YES/TRUE) in step (S2), it requests pallet unloading (retrieval) from the data server 91 (S3), and proceeds to step (S4). Details of the pallet unloading request operation will be described later with reference to the sequence diagram of FIG. 10.

If control unit T1 determines that none have reached 20 (NO/FALSE) in step (S2), it determines whether ON signals are not being output from all sensors T21 to T23 of the TKL stations TKL1 to TKL3, that is, whether all signals are OFF and there are no inserted pallet 3 (S4).

If the control unit T1 determines YES (YES/TRUE) in step (S4), it transmits a processing disable notification to the first blank machine M1 (S5), then requests supply of an empty pallet 3 from the data server 91 (S6) and returns to step (S1).

If the control unit T1 determines NO (NO/FALSE) in step (S4), it determines whether any of the signals from the sensors T21 to T23 of the TKL stations TKL1 to TKL3 is ON and any sensor signal is OFF (pallet 3 is not inserted) (S7).

If the control unit T1determines NO (NO/FALSE) in step (S7), that is, there are no TKL stations with OFF sensor signals, in other words, pallets 3 are inserted in all the TKL stations TKL1 to TKL3, the control unit T1 determines whether any of the internal parameters Pm1 to Pm3 is less than 20 (S8).

If the control unit T1 determines YES (YES/TRUE) in step (S7), that is, any of the internal parameters Pm1 to Pm3 is less than 20, it transmits a processing enable notification to the first blank machine M1 (S9) and returns to step (S1).

If the control unit T1 determines NO (NO/FALSE) in step (S7), that is, the internal parameters Pm1 to Pm3 are all 20, it transmits a processing disable notification to the first blank machine M1 (S10) and returns to step(S1).

In this way, through the YES determination in step (S8), processing by the first blank machine M1 continues until all internal parameters Pm1 to Pm3 reach 20 and pallet 3 loading is completed.

When it is determined NO (NO/FALSE) in step (S8), that is, when it is determined that the internal parameters have reached 20 and no more processed articles can be placed on the pallet 3, the control unit T1 transmits a processing disable notification to the first blank machine M1 (S10). Also, when it is determined YES (YES/TRUE) in step (S4), that is, when it is determined that no pallet 3 is inserted in any TKL stations TKL1 to TKL3, the control unit T1 also transmits a processing disable notification to the first blank machine M1 (S5).

As described in the above flow, the take-out loader TKL requests supply of an empty pallet 3 from the data server 91 when the pallet 3 is not inserted in any of the TKL stations TKL1 to TKL3. The operation sequence related to this request will be explained with reference to FIG. 7. FIG. 7 is the sequence diagram of the operation requesting supply of an empty pallet 3 by the take-out loader TKL. In FIG. 7, for simplification, the take-out loader TKL is simply referred to as TKL, and the transport robot R is also referred to as AMR.

First, at take-out loader TKL, when it is determined YES (YES/TRUE) in step (S4) of the flow diagram in FIG. 6, that is, any of TKL stations TKL1-TKL3 is OFF (S701), control unit T1 requests supply of empty pallet 3 from data server 91 [S702: corresponds to step (S5) in FIG. 6].

Upon receiving this request, the data server 91 searches for an empty pallet 3, based on the current pallet management state, and designates the AMR's destination (S703).

In this situation, the data server 91 extracts pallet No. 12 from the empty pallet 3 search and requests the AMR to transport the empty pallet No. 12 by designating the AMR station St10 as the destination (S704).

The AMR receives this request, moves to the AMR station St10 (S705), and acquires (loads) the pallet No. 12 (S706). The transport destination for the empty pallet acquired at the AMR station St10 is preset to be the intermediate buffer 1. Accordingly, the AMR moves to the intermediate buffer 1 carrying pallet No. 12 (S707).

As described earlier, the AMR sets pallet No. 12 in (accommodates it in) either of the dedicated AMR pallet accommodation sections 11Pa or 11Pb of the intermediate buffer 1 (S708). When both pallet accommodation sections 11Pa and 11Pb are empty, the pallet accommodation section 11Pa is prioritized.

Next, the AMR requests the intermediate buffer 1 to perform a check operation to determine whether the accommodated pallet No. 12 is empty (S709). The intermediate buffer 1 executes the pallet state confirmation operation using the imaging device 124 (S710) and responds to the AMR, confirming that the check is complete and pallet No. 12 is an empty pallet (S711).

The intermediate buffer 1 also transmits this check result to the data server 91. The data server 91 verifies the information that pallet No. 12 in transport is empty against the contents of the pallet management table. In this case, the verification result is "match", so the pallet management table is maintained without changes.

The AMR reacquires and loads the checked pallet No. 12 (S712). The AMR notifies the data server 91 that it has acquired pallet No. 12 (S713). Upon receiving this, the data server 91 updates the location of pallet No. 12 in the pallet management table from the intermediate buffer 1 to the AMR (S714).

The AMR moves to the take-out loader TKL carrying pallet No. 12 (S715). The AMR notifies the TKL that it will insert pallet No. 12 (S716) and sets pallet No. 12 in an empty station among TKL stations TKL1 to TKL3 designated by the take-out loader TKL (S717).

When the TKL station designated by the take-out loader TKL becomes ON due to this setting (S718), the take-out loader TKL transmits the AMR a completion notification for the empty pallet supply request (S719). Also, the take-out loader TKL transmits the data server 91 information that pallet No. 12 is at a TKL station (e.g., TKL1) (S720). Upon receiving this, the data server 91 updates the "pallet location" item in the pallet management table for pallet No. 12 from the AMR station St10 to the TKL station TKL1 (S721).

When an empty pallet is found to be in the intermediate buffer 1 in processing S703 of the sequence diagram in FIG. 7, the data server 91 instructs the AMR as follows: move directly to the take-out loader TKL, and after checking that the pallet designated as a TKL candidate in the intermediate buffer 1 is confirmed to be empty, transport that empty pallet to the take-out loader TKL.

Next, as an operation example of the intermediate buffer 1, the operation when the pallet 3 is inserted by the transport robot R (hereinafter, the first operation) will be explained with reference to FIGS. 8A and 8B. This operation example includes some operations of the data server 91. FIG. 8A is the flow diagram of the first half of the first operation by the intermediate buffer 1, and FIG. 8B is the flow diagram of the latter half of the first operation.

The control unit 13 of the intermediate buffer 1 checks whether to end the operation (S21). If there is an instruction to end the operation from an external source, such as an operator (YES), it ends the operation.

If there is no instruction to end the operation (NO/FALSE), the control unit 13 continues the operation. The control unit 13 constantly determines whether a specific pallet (hereinafter, target pallet) has been stored in either 6a or 8b, the bottommost pallet accommodation sections 11P, transported by the transport robot R according to an instruction from the data server 91 (S23). This determination is made by monitoring whether any sensor in 6a or 8b has changed from OFF state to ON state indicating insertion. The control unit 13 returns to step (S21) if it determines NO (NO/FALSE) in step (S23).

If the control unit 13 determines YES (YES/TRUE) in step (S23), it executes the pallet state confirmation operation using an image captured by the imaging device 124 to confirm whether the inserted target pallet is empty (S24) and determines whether it is empty (S25).

If the control unit 13 determines the pallet is empty (YES/TRUE) in step (S25), it refers to the pallet management table managed by the data server 91 and determines whether there is information registered in the "pallet state" item for the target pallet (S26). If the control unit 13 determines the pallet is not empty (NO/FALSE) in step (S25), it refers to the pallet management table managed by the data server 91 and determines whether there is information registered in the "Pallet state" item for the target pallet (S27).

If the control unit 13 determines YES (YES/TRUE) in steps (S26) and (S27), it moves to A in FIG. 8B. If the control unit 13 determines NO (NO/FALSE), it proceeds to step (S32). The control unit 13 transmits this determination result to the data server 91.

Upon receiving this determination result, the data server 91 sets the "pallet state" item for the target pallet in the pallet management table to "empty pallet" in step (S32) and moves to B in FIG. 8B.

At A in FIG. 8B, the data server 91 determines whether the "pallet state" item for the target pallet in the pallet management table matches the determination result in step (S25) (S28).

If the data server 91 determines they match (YES/TRUE), it updates the "pallet state" item without changes and proceeds to step (S31). If the data server 91 determines they don't match (NO/FALSE), it prioritizes the determination result from step (S25) and changes the "pallet state" item to "empty pallet", then proceeds to step (S31). Also, operations via B from step (S32) proceed to step (S31).

The control unit 13 of the intermediate buffer 1 searches for a pallet accommodation section 11P that does not accommodate a pallet 3, from the state of sensors 112 of pallet accommodation sections 11P excluding 6a and 8b, starting from a tier with the highest priority (S31). The control unit 13 moves and accommodates the target pallet in the first empty pallet accommodation section 11P found in the search (S32).

When the sensor 112 of the pallet accommodation section 11P accommodating the target pallet becomes ON (S34), the control unit 13 of the intermediate buffer 1 transmits this information to the data server 91. Upon receiving this, the data server 91 updates the "pallet location" item in the pallet management table from the ARM (transport robot R) to the pallet accommodation section 11P of the tier accommodating the target pallet in the intermediate buffer 1 (S35). After that, it returns to step (S21) in FIG. 8A as illustrated by C.

As an operation example of the intermediate buffer 1, the operation when the pallet 3 is inserted by a worker (hereinafter, the second operation) will be explained with reference to FIGS. 9A and 9B. This operation example includes some operations of the data server 91. FIG. 9A is the flow diagram of the first half of the second operation by the intermediate buffer 1, and FIG. 9B is a flow diagram of the latter half of the second operation.

First, the control unit 13 of the intermediate buffer 1 checks whether to end the operation (S41). If there is an instruction to end the operation from an external source, such as an operator (YES/TRUE), it ends the operation.

If there is no instruction to end the operation (NO/FALSE), the control unit 13 continues the operation. The control unit 13 constantly determines whether a specific pallet (hereinafter, target pallet) has been inserted by a worker in any tier other than the bottommost 6a and 8b (general-purpose tiers) in the pallet accommodation sections 11P (S43). This determination is made by monitoring whether any sensor in general-purpose tiers has changed from OFF state to ON state indicating insertion. The control unit 13 returns to step (S41) if it determines NO (NO/FALSE) in step (S43).

If the control unit 13 determines YES (YES/TRUE) in step (S43), it executes the pallet state confirmation operation using an image captured by the imaging device 124 to confirm whether the inserted target pallet is empty (S44) and determines whether it is empty (S45).

If the control unit 13 determines the pallet is empty (YES/TRUE) in step (S45), it refers to the pallet management table managed by the data server 91 and determines whether there is information registered in the "pallet state" item for the target pallet (S46).

If the control unit 13 determines the pallet is not empty (NO/FALSE) in step (S45), it refers to the pallet management table managed by the data server 91 and determines whether there is information registered in the "pallet state" item for the target pallet (S47).

If the control unit 13 determines YES (YES/TRUE) in steps (S46) and (S47), it moves to A in FIG. 9B. If the control unit 13 determines NO (NO/FALSE), it proceeds to step (S52).

In step (S52), the data server 91 sets the "pallet state" item for the target pallet in the pallet management table to "empty pallet" and moves to B in FIG. 9B.

At A in FIG. 9B, the data server 91 determines whether the "pallet state" item for the target pallet in the pallet management table matches the determination result in step (S45) (S48).

If the data server 91 determines they match (YES/TRUE), it updates the "pallet state" item without changes and proceeds to step (S51). If the data server 91 determines they don't match (NO/FALSE), it prioritizes the determination result from step (S45) and changes the "pallet state" item to "empty pallet", then proceeds to step (S51). Also, operations via B from step (S52) proceed to step (S51).

The control unit 13 of the intermediate buffer 1 returns the target pallet to the tier of the pallet accommodation section 11P where it was inserted in step (S43) and accommodates it there (S51).

When the sensor 112 of the pallet accommodation section 11P accommodating the target pallet becomes ON (S53), the control unit 13 of the intermediate buffer 1 transmits this information to the data server 91. Upon receiving this, the data server 91 updates the "pallet location" item in the pallet management table from the most recent location where the worker acquired it to the pallet accommodation section 11P of the tier accommodating the target pallet (S54). After that, it returns to step (S41) in FIG. 9A as illustrated by C.

Next, the pallet retrieval request operation by the take-out loader TKL for unloading a processed article will be explained with reference to the sequence diagram in FIG. 10. FIG. 10 is the sequence diagram of the operation requesting pallet retrieval by the take-out loader TKL.

First, at the take-out loader TKL, when it is determined YES (YES/TRUE) in step (S2) of the flow diagram in FIG. 6, that is, any of the internal parameters Pm1 to Pm3 has reached the full count of 20 (S101), the control unit T1 requests pallet unloading from the AMR (S102).

Upon receiving this, the AMR moves to the TKL station where the internal parameter reached 20 at the take-out loader TKL (S103) and notifies the take-out loader TKL that the AMR has arrived (S104).

Next, the AMR places (sets) the pallet 3 where the article 5 fully placed, at the TKL station (S105), and departs from (exits from) the TKL station (S106). The AMR notifies both the take-out loader TKL and the data server 91 of pallet unloading completion (S107) (S108) and moves to the intermediate buffer 1 (S109).

The data server 91 receives this notification and updates the "pallet location" item for the target pallet in the pallet management table from the TKL to the AMR (S110).

When the AMR arrives at the intermediate buffer 1, it sets the pallet it has transported in the dedicated AMR pallet accommodation section 11P (S111), and requests pallet insertion from the intermediate buffer 1 (S112).

The intermediate buffer 1 accepts this request and receives the pallet insertion (S113), then executes the pallet state confirmation operation to determine whether the pallet is empty or has an article placed thereon (S114). This corresponds to the operation in step (S24) in FIG. 8A.

The intermediate buffer 1 moves the pallet to the empty pallet accommodation section 11P and accommodates it (inserts it) (S115), notifies the AMR of insertion completion (S116), and notifies the data server 91 of pallet insertion completion (S117).

The data server 91 receives this notification and updates the "pallet location" item for the target pallet in the pallet management table from the AMR to the intermediate buffer (S118).

Operation requests to the data server 91 and the transport robot R can be executed by an operator using the operator terminal 93. An operation example by this request will be explained with reference to the sequence diagram in FIG. 11. FIG. 11 is the sequence diagram of the operation responding to the pallet movement request by the operator in the article transport system ST.

This operation is, for example, for the case of requesting the AMR to transport a pallet where a deburred article is placed, from the first work area WS1 to the welding process as the next process. This corresponds to a request to transit to the state of transport C in the explanation of the pallet management table in FIG. 5.

When the operator completes a work including placing of the deburred finished article on the pallet (S201), the operator operates the terminal 93 to change the "pallet state" item in the pallet management table from "empty Pallet" to "placed" and updates it (S202), and then notifies the data server 91 (S203). Upon receiving this notification, the data server 91 changes the "pallet state" item in the pallet management table from "B" to "C" and updates it (S204).

The operator operates the operator terminal 93 to transmit a pallet operation command to the data server 91 for moving the pallet where an article is placed (S205). At this time, an AMR station is specified where the target pallet is placed. Here, it is the AMR station St18 in the first work area WS1.

The data server 91 receives this pallet operation command from the operator terminal 93 (S206) and transmits, to the AMR, a command to move the pallet at the AMR station St18 in the first work area WS1 specified by the operator (S207).

The AMR receives this command, moves to the AMR station St18 in the first work area WS1 (S208), places (sets) the target pallet (S209), unloads it from the AMR station St18 (S210), and notifies the data server 91 of the unloading (S211).

Upon receiving this unloading notification, the data server 91 updates the "pallet location" item in the pallet management table from "St18" to "AMR" (S212).

When moving the pallet to the next process, it could be transported directly to the next process, but in the article transport system ST, it is first accommodated in the intermediate buffer 1 to confirm the pallet state (empty or placed) at the intermediate buffer 1. Therefore, the AMR moves to the intermediate buffer 1 carrying the target pallet placed thereon (S213).

When the AMR arrives at the intermediate buffer 1, it sets the pallet it has transported in the dedicated AMR pallet accommodation section 11P (S214) and requests pallet insertion from the intermediate buffer 1 (S215).

The intermediate buffer 1 accepts this request and receives pallet insertion (S216), then executes the pallet state confirmation operation to determine whether the pallet is empty or has a placed article (S217). This corresponds to the operation in step (S24) in FIG. 8A.

The intermediate buffer 1 moves the confirmed pallet to an empty pallet accommodation section 11P and accommodates it (inserts it) (S218), notifies the AMR of insertion completion (S219), and notifies the data server 91 of pallet insertion completion (S220).

The data server 91 receives this notification and updates the "pallet location" item for the target pallet in the pallet management table from the AMR to the intermediate buffer 1 (S221).

As detailed above, the article transport system ST enables the data server 91 to manage the latest states and locations of pallets used within the system. This management is performed regardless of whether pallets are handled by the transport robot R (AMR) or an operator (worker), enabling mixed operation of the transport robot R and the operator for pallet transport, allowing flexible operation of article transport and improving efficiency of article transport. This provides significant benefits in current situations where smooth article transport is desired without depending solely on an automated guided vehicle (transport robot R), but having both the automated guided vehicle and a worker handle pallet movement.

The article transport system ST supplies an empty pallet from the intermediate buffer 1, which confirms whether a pallet is empty when inserted, to a processing machine (first blank machine M1 in this example) that requires a pallet for transporting a processed article to be necessarily empty. Therefore, a pallet with a placed article is never mistakenly supplied to such a processing machine, preventing malfunctions in article transport.

As described above, the article transport system according to the first aspect of the present invention includes: a processing machine (first blank machine) M1, a pallet 3 on which an article 5 processed by the processing machine M1 is placed, a transport robot R configured to transport the pallet 3, a data server 91 configured to make a transport request to the transport robot R for transporting the pallet 3 to the processing machine M1, and an intermediate buffer 1 including a pallet accommodation section 11P which accommodates the pallet 3, in which the pallet 3 is inserted and from which the pallet is retrieved, and configured to determine whether the article 5 is placed on the pallet 3, and to transmit a determination result to the data server 91. The data server 91 designates the pallet 3, which is to be transported by the transport robot R in the transport request, as an empty pallet determined to have no article 5 placed thereon, among the pallet 3 accommodated in the intermediate buffer 1.

This enables reliable supply of an empty pallet for transporting a processed article to the next process, to the processing machine, facilitating manufacturing. Particularly when the processing machine is for the first process in product manufacturing, manufacturing can be further facilitated.

Also, in the first aspect, the intermediate buffer 1 may include the pallet accommodation section 11P, to which a worker can transport and insert the pallet 3, may be configured to perform determination of whether the article 5 is placed on both the pallet 3, which is inserted by the transport robot R, and whether the article 5 is placed on the pallet 3, which is inserted by the worker, and to transmit a determination result to the data server 91.

This enables reliable supply of the pallet 3 from the intermediate buffer 1 to the processing machine M1 as an empty pallet 3, regardless of whether insertion in the intermediate buffer 1 is by the transport robot R or the worker.

Also, in the first aspect, multiple pallets 3 may be operated, the transport robot R may be configured to transmit information about a pallet location specifying a transport location of the transported pallet 3, to the data server 91, and the data server 91 may be configured to manage a pallet state and a location for each of the multiple pallets 3, based on at least: pallet state information indicating whether the pallet 3 is empty and pallet location information specifying the pallet accommodation section 11P where the pallet 3 is accommodated, which are transmitted from the intermediate buffer 1, and pallet location information transmitted from the transport robot R.

This enables quick identification and supply of an empty pallet 3 to be supplied by the transport robot R to the processing machine M1 when there is a request for empty pallet 3 supply from the processing machine M1.

Furthermore, the system may include the operator terminal 93 configured to be operated by an operator operating the processing machine M1 and by a worker transporting the pallet, to communicate with the data server 91, wherein the operator terminal 93 can modify the pallet state and the location managed by the data server 91.

This enables constant management of the latest information for each pallet 3 even when the transport robot R and a worker operate multiple pallets 3 in the mixed operation, further facilitating article transport.

Also, the article transport method according to the second aspect of the present invention uses multiple pallets 3, the data server 91, and the intermediate buffer 1 and the transport robot R communicating with the data server 91. The intermediate buffer 1 includes multiple pallet accommodation sections 11P capable of accommodating the pallets 3, and transmits information specifying a pallet accommodation section 11P accommodating an empty pallet 3, to the data server 91. The transport robot R transports the pallet 3 from a first location to a second location which are designated by the data server 91. When supplying an empty pallet 3 for placing and transporting an article 5 processed by the processing machine M1, to a processing machine M1, the data server 91 transports and supplies the empty pallet 3 from the pallet accommodation section 11P specified by the information, to processing machine M1.

This enables reliable supply of an empty pallet to a processing machine for reliable transport of a processed article to the next process, facilitating manufacturing. Particularly when the processing machine is for the first process in product manufacturing, manufacturing can be further facilitated.

The embodiments of the present invention are not limited to the above-described configurations and may be modified within the scope that does not depart from the gist of the present invention.

The article transport system ST can operate with both the transport robot R and a worker simultaneously, but the simultaneous operation is not always necessary; a period where only the transport robot R performs transport are acceptable. While the example explained that the control unit 13 of the intermediate buffer 1 determines whether the inserted pallet 3 is empty, this is not limited thereto. The control unit 13 may transmit image information J2A (J2B) to the data server 91, and the data server 91 may make a determination based on this image information J2A (J2B). The determination result is transmitted from the data server 91 to the intermediate buffer 1.

Updates to the pallet management table by the data server 91 should preferably be executed to record confirmation times as history even when there are no changes. Examples include steps (S29) and (S49).

As embodiments and variations, while the example explained that a transport request to the transport robot R is made by the data server 91 connected to the network N as the transport request unit, the transport request unit is not limited to the data server 91 only. The article transport system ST may execute a transport request using a device connected to the network N and having a control function, such as a web server, a shared server, a shared PC, or a shared terminal. Also, all or part of this article transport system ST may be constructed not as on-premises computing built within the factory, but as cloud computing.

### (U.S. Designation)

This international patent application is related to the U.S. designation, and claims the benefit of priority based on Article 119(a) of U.S. patent law from Japanese Patent Application No. 2023-013238 filed on January 31, 2023, the entire content of which disclosure is incorporated herein by reference.

### Reference Numerals

1: Intermediate buffer
1A: First intermediate buffer
1B: Second intermediate buffer
1A1, 1B1: Control unit
1A2, 1B2: Sensor group
11: Housing
11a: First shelf
11b: Second shelf
11P, 11Pa, 11Pb: Pallet accommodation section
111: Guide bracket
112: Sensor
12: Movable frame
122: Pallet lifting unit
123a, 123b: Drive unit
124, 124A, 124B: Imaging device
13: Control unit
3: Pallet
5: Article
91: Data server (transport request unit)
911: CPU (central processing unit)
912: Storage unit
92: In-factory wireless LAN device
93: Operator terminal
94: CAM
BA: General bender area
BA1-BA4: General bender
BB: Robot bender area
BB1, BB2: Robot bender
FL: Floor
J1A, J1B: Pallet accommodation information
J2A, J2B: Image information
M: Blank area
M1: First blank machine
M1a: Main body
M2: Second blank machine
N: Network
P: Factory
Pm1-Pm3: Internal parameter
P1-P14: Pallet placement area
R: Transport robot (AMR)
Ra, Ra1, Ra2: Control unit
R1: First transport robot
R2: Second transport robot
ST: Article transport system
St1-St19: AMR station
TKL: Take-out loader
TKL1-TKL3: TKL station
T1: Control unit
T2: Sensor group
T21-T23: Sensor
WD: Welding area
WD1-WD3: Welding machine
WS1: First work area
WS11: Work space
WS2: Second work area
WS21: Flat placement area
WS22: Assembly area

## Claims

1. An article transport system comprising:
a processing machine;
a pallet on which an article processed by the processing machine is placed;
a transport robot configured to transport the pallet;
a transport request unit configured to make a transport request to the transport robot for transporting the pallet to the processing machine; and
an intermediate buffer: including a pallet accommodation section which accommodates the pallet, in which the pallet is inserted and from which the pallet is retrieved; and configured to determine whether the article is placed on the pallet and to transmit a determination result to the transport request unit, wherein
the transport request unit is configured to designate the pallet, which is to be transported by the transport robot in the transport request, as an empty pallet determined to have no article placed thereon, among the pallet accommodated in the intermediate buffer.

2. The article transport system according to claim 1, wherein the intermediate buffer: includes the pallet accommodation section to which a worker can transport and insert the pallet; and is configured to perform determination of whether the article is placed on the pallet which is inserted by the transport robot, and whether the article is placed on the pallet which is inserted by the worker, and to transmit a determination result to the transport request unit.

3. The article transport system according to claim 1, wherein
multiple pallets are operated,
the transport robot is configured to transmit information about a pallet location specifying a transport location of the transported pallet, to the transport request unit,
the transport request unit is configured to manage a pallet state and a location for each of the multiple pallets, based on at least:
pallet state information indicating whether the pallet is empty and pallet location information specifying the pallet accommodation section where the pallet is accommodated, which are transmitted from the intermediate buffer; and
pallet location information transmitted from the transport robot.

4. The article transport system according to claim 3, further comprising an operator terminal configured to be operated by an operator operating the processing machine and by a worker transporting the pallet, to communicate with the transport request unit, wherein the operator terminal is able to modify the pallet state and the location managed by the transport request unit.

5. An article transport method using an article transport system including multiple pallets, a transport request unit, and an intermediate buffer and a transport robot communicating with the transport request unit, the method comprising:
transmitting, by the intermediate buffer including multiple pallet accommodation sections capable of accommodating the pallets, information specifying a pallet accommodation section accommodating an empty pallet, to the transport request unit;
transporting, by the transport robot, the pallet from a first location to a second location which are designated by the transport request unit; and
when supplying, to a processing machine, an empty pallet for placing and transporting an article processed by the processing machine, transporting and supplying, by the transport request unit, the empty pallet from the pallet accommodation section specified by the information, to the processing machine.
